Europäisches Patentamt

European Patent Office

Office européen des brevets

(19)

(11) Numéro de publication : **0 119 142
B1**

(12) **FASCICULE DE BREVET EUROPÉEN**

(45) Date de publication du fascicule du brevet :
09.11.88

(51) Int. Cl.⁴ : **H 02 H 7/085**, H 02 P 7/62

(21) Numéro de dépôt : **84400508.2**

(22) Date de dépôt : **13.03.84**

(54) Dispositif d'alimentation électrique du moteur d'une machine électro-portative assurant la protection contre le couple de réaction produit par celle-ci.

(30) Priorité : **15.03.83 FR 8304235**

(43) Date de publication de la demande :
**19.09.84 Bulletin 84/38**

(45) Mention de la. délivrance du brevet :
**09.11.88 Bulletin 88/45**

(84) Etats contractants désignés :
**CH DE FR IT LI NL**

(56) Documents cités :
**EP-A- 0 018 626
FR-A- 2 440 638
GB-A- 2 058 405
ELECTRONIC DESIGN, vol. 29, no. 10, 14 mai 1981, page 221, Rochelle Park, USA T. GROSS: "Fast current limiter protects stalled power tools"
TOUTE L'ELECTRONIQUE, no. 466, août/septembre 1981, pages 75-78, Paris, FR. J. BRARDO: "Variateur de vitesse commande de triac en proportionnel"**

(73) Titulaire : **Black & Decker Inc.
Drummond Plaza Office Park 1423 Kirkwood Highway
Newark Delaware 19711 (US)**

(72) Inventeur : **Fayolle, Bruno Ludovic Marie-Christian
13 B rue Richelieu
F-69100 Villeurbanne (FR)**

(74) Mandataire : **Martin, Jean-Jacques et al
Cabinet REGIMBEAU 26, Avenue Kléber
F-75116 Paris (FR)**

EP 0 119 142 B1

## Description

La présente invention concerne un dispositif d'alimentation électrique du moteur d'une machine électroportative, destiné à assurer la protection contre le couple de réaction produit par cette machine.

Ce phénomène apparaît notamment lors d'un blocage soudain de l'outil entraîné par la machine. Le rotor du moteur étant alors immobilisé ou fortement ralenti, le couple développé va être appliqué au stator du moteur et transmis à la poignée (ou autre moyen de préhension) de la machine. Cet effort est dangereux pour l'utilisateur car celui-ci peut être dans l'impossibilité d'assurer un maintien suffisant de la machine pour que le moteur se bloque.

Ce phénomène, pour un même moteur et à puissance égale, est d'autant plus accentué que la vitesse est lente (à puissance égale, le couple augmente avec le rapport de réduction).

En tout état de cause, outre la protection de l'utilisateur qui est un aspect primordial de la sécurité, il n'est pas souhaitable de continuer à alimenter le moteur lorsqu'il est bloqué, la dissipation de courant par effet Joule pouvant l'endommager très rapidement.

Diverses solutions ont été proposées pour protéger l'utilisateur contre le couple de réaction d'une machine ; la plupart de ces solutions font néanmoins appel à des moyens mécaniques assurant le débrayage de l'entraînement : de tels moyens nécessitent une adaptation du moteur ou du réducteur de la machine, entraînant un surcroît de coût et une augmentation des dimensions. En outre, leurs inconvénients majeurs sont le manque de reproductibilité du seuil de déclenchement, un vieillissement rapide dû à l'usure, et le fait qu'ils limitent le couple à une valeur fixe.

La même remarque vaut pour les systèmes disjoncteurs thermiques ou électriques également connus, qui rentrent en action lorsque le courant dépasse une valeur limite donnée : cette valeur n'est pas représentative du couple de réaction. En effet, lorsque le rotor est bloqué et le stator entraîné, le courant peut rester inférieur à cette valeur limite : l'utilisateur n'est alors en aucune façon protégé.

De tels circuits (électriques) sont par exemple décrits dans les articles de T. Gross « Fast current limiter protects stalled power tools », dans « Electronic Design » du 14 mai 1981 et de J. Brardo « Variateur de vitesse commande de triac en proportionnel » dans « Toute l'Electronique » de août/septembre 1981.

L'un des buts de la présente invention est d'assurer cette protection, de manière à interrompre l'alimentation du moteur lorsqu'un couple de réaction est détecté, cette action ayant lieu avec une constante de temps très faible pour que l'utilisateur ne subisse aucun dommage avant déclenchement du dispositif.

Pour assurer une protection efficace, il est souhaitable d'anticiper la détection d'un couple de valeur élevée dangereux pour l'utilisateur ; pour cela, plutôt que de mesurer la valeur absolue du couple, on préfère mesurer le taux d'accroissement $\Delta C/\Delta t$ de celui-ci. En effet, en courant alternatif sinusoïdal, le couple moyen sur une période est proportionnel à la valeur de crête (elle-même proportionnelle à la valeur efficace) du courant. Il suffit donc d'en évaluer le taux d'accroissement pour obtenir un signal représentatif de l'information recherchée, et significatif de l'apparition ou du risque d'apparition d'un couple de réaction dangereux pour l'utilisateur.

Un circuit électronique assurant une telle fonction est notamment décrit dans le EP-0 018 626, au nom de la Demanderesse, qui est du type comprenant les éléments énoncés dans le préambule de la revendication 1.

En d'autres termes, en sortie de l'ensemble redresseur-intégrateur, on obtient un signal sensiblement proportionnel à l'intensité de crête. Le circuit différentiateur en détectera les variations brusques, les moyens intégrateurs assurant la fonction de mémorisation de la valeur de crête du signal d'une alternance à l'autre.

Par la double opération d'intégration-différentiation, la détection devient indépendante de la valeur moyenne du courant traversant le moteur, c'est-à-dire indépendante de la valeur moyenne du couple, qui n'est pas significative en elle-même, comme indiqué plus haut.

On voit ici que le temps de réponse des moyens de détection peut être aussi bas qu'une ou une demi-période, c'est-à-dire 20 ou 10 ms pour une alimentation à 50 Hz : de telles valeurs sont très inférieures à celles obtenues par les systèmes classiques à débrayage mécanique ou à disjoncteur thermique, et permettent au circuit de l'invention d'atteindre les performances élevées réalisées par le dispositif numérique complexe de la technique antérieure précitée.

En outre, on assure cette protection par l'intermédiaire du dispositif d'alimentation électrique du moteur, c'est-à-dire par des moyens purement électriques.

On peut ainsi pallier les défauts — tant en ce qui concerne la détection que l'action — des systèmes mécaniques ou thermiques, et en outre plus facilement adapter l'invention aux ensembles moteurs et réducteurs actuels, voire même équiper des machines existantes d'un dispositif de protection additionnel : on verra en effet que ce dispositif s'intercale simplement entre le moteur et les bornes d'alimentation du réseau électrique. Son emplacement physique par rapport à la machine est donc sans importance.

Plus précisément, le circuit décrit par le EP-A-0 018 626 numérise un signal représentatif de la valeur instantanée de l'intensité traversant le moteur, recherche et mémorise les valeurs de crête successives de ce signal, puis calcule le rapport $\Delta I/\Delta t$. Si ce rapport excède un certain seuil, l'alimentation du moteur est immédiatement interrompue.

Bien que ce circuit, dans son principe, assure une protection très efficace (notamment du point de vue du temps de réponse), sa complexité et l'emploi de composants coûteux (microordinateur et convertisseur analogique-numérique, notamment) lui empêchent de connaître une grande diffusion.

L'un des objets de l'invention est d'assurer cette même fonction sans numérisation de signal, par des moyens purement analogiques et à partir d'un nombre réduit de composants de faible coût.

Par ailleurs et surtout, notamment avec des moteurs de forte puissance et/ou des charges présentant une inertie importante, il peut se faire qu'au moment de la mise sous tension du dispositif le système se déclenche spontanément : en effet, le courant passant d'une valeur nulle à une valeur importante (courant de démarrage) en un temps très court, ce brusque appel de courant peut être interprété par le circuit de détection de la même façon qu'un blocage en cours de fonctionnement.

L'un des buts de l'invention est d'éviter ce déclenchement intempestif, et pour cela de prévoir des moyens aptes à empêcher l'interruption de l'alimentation par les moyens de détection pendant une durée prédéterminée suivant la mise sous tension du moteur.

Cependant, l'outil entraîné par le moteur peut se trouver déjà bloqué à l'instant de la mise sous tension. Dans ce cas, aucune protection ne sera assurée pendant la durée de l'inhibition. Or, un couple de réaction peut être subi par l'utilisateur pendant cette durée, couple qui peut être très supérieur aux capacités physiques de celui-ci. Il est donc utile d'assurer une protection même pendant le régime transitoire de démarrage du moteur.

Cette protection est assurée, selon l'invention, par les organes énoncés dans la partie caractéristique de la revendication 1.

On protège ainsi l'utilisateur contre une augmentation constante mais lente du couple qui ne serait pas prise en compte autrement.

Par ailleurs, dans le cas où le moteur coopère avec un réducteur à plusieurs vitesses mécaniques, il est de préférence prévu autant de valeurs de référence que de vitesses, valeurs dont la commutation est effectuée au moment du choix de la vitesse correspondante, de manière que le couple de réaction maximal reste sensiblement le même quelle que soit la vitesse choisie.

D'autres caractéristiques et avantages de l'invention apparaîtront à la lecture de la description ci-dessous d'un exemple de réalisation de l'invention, faite en référence aux figures annexées sur lesquelles :
- la figure 1 est un schéma-bloc d'un exemple de réalisation de l'invention,
- la figure 2 est un schéma électronique détaillé correspondant au schéma-bloc de la figure 1,
- les figures 3 et 4 représentent différents signaux obtenus au moyen du circuit des figures 1 ou 2.

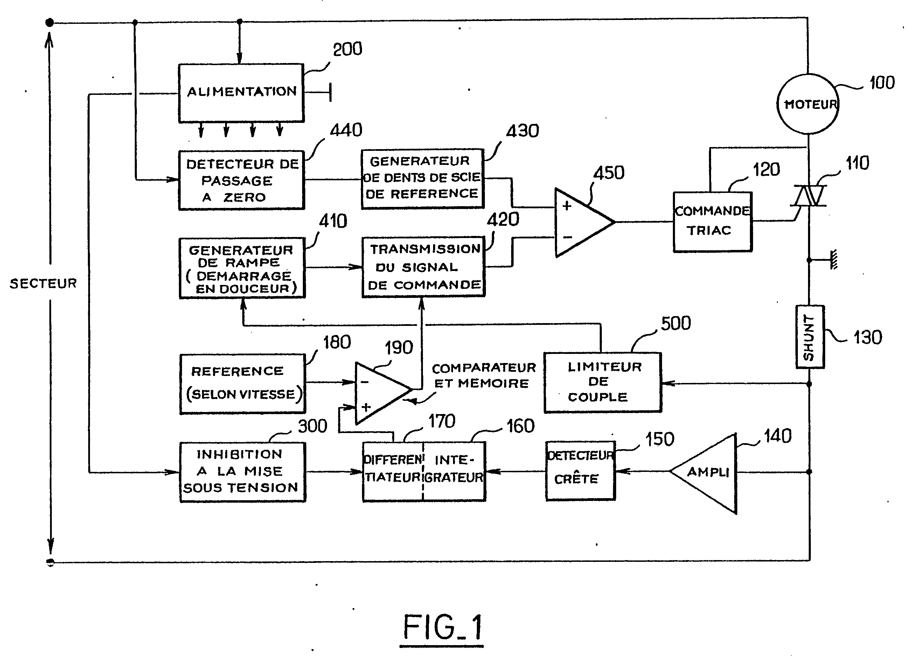

Sur la figure 1, le moteur 100 est relié aux bornes du secteur par l'intermédiaire d'un semi-conducteur déclenché 110 tel qu'un thyristor ou un triac, commandé de manière connue par un circuit 120 agissant sur sa gâchette. Un shunt 130 de faible valeur permet d'extraire un signal proportionnel à l'intensité traversant le moteur. Ce signal est amplifié par un amplificateur 140 et redressé par un redresseur 150. L'intégrateur 160 transforme le signal issu du redresseur en un signal sensiblement proportionnel à la valeur de crête de l'intensité. Le circuit différentiateur 170, en série avec l'intégrateur 160, détecte les brusques variations de ce signal. Le résultat est transmis à un circuit 190 qui compare le taux d'accroissement de la valeur de crête à une valeur de référence fournie par un circuit 180, correspondant au taux d'accroissement maximal admissible ; le circuit 190 bascule et se verrouille lorsque le taux d'accroissement de la valeur crête dépasse la valeur de référence.

Dans le cas où la machine comporte un réducteur à plusieurs vitesses mécaniques, il sera prévu des signaux de référence différents qui devront être commutés au moment du passage des vitesses. De cette façon, le seuil physique de déclenchement de la protection sera sensiblement le même quelles que soient les conditions de fonctionnement de la machine.

La fonction de détection étant ainsi assurée, si le comparateur détecte un taux d'accroissement de courant supérieur à la valeur de référence, le circuit 120 de commande de gâchette du triac est bloqué de manière à interrompre l'alimentation du moteur.

Les différents organes du dispositif sont alimentés en courant continu par un circuit 200 relié au secteur.

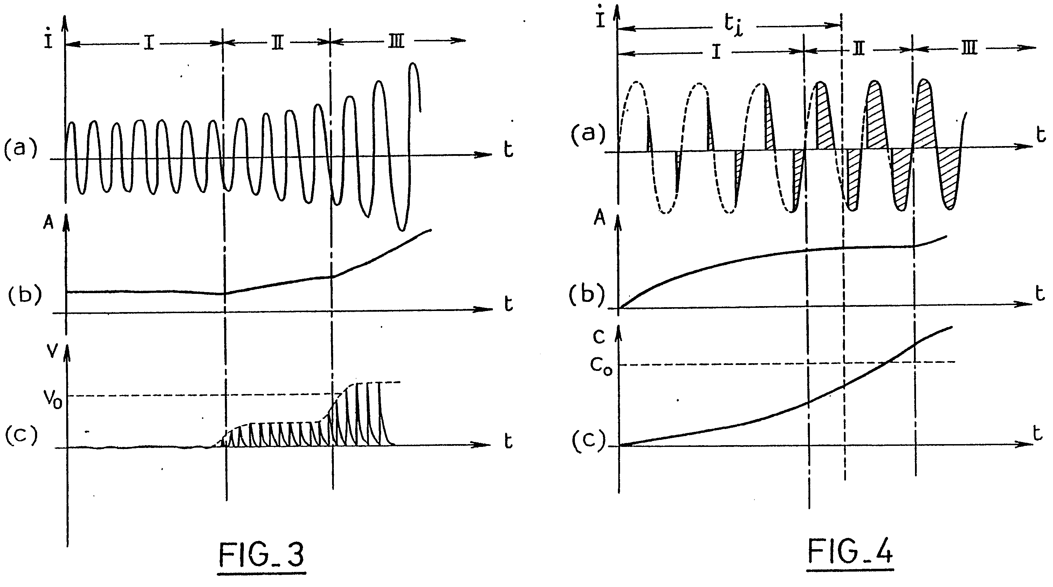

La figure 3 montre l'allure de différents signaux pour un fonctionnement : (I) à couple constant ; (II) à couple à croissance lente ; (III) à couple à croissance rapide.

Le diagramme (a) montre l'allure de l'intensité I d'alimentation du moteur : on voit que la valeur de crête du courant est sensiblement proportionnelle au couple développé.

Le diagramme (b) représente le signal A obtenu en sortie de l'intégrateur 160 : ce signal est sensiblement proportionnel à la valeur de crête de l'intensité I du diagramme (a).

Enfin, le diagramme (c) représente le signal V en sortie du différentiateur 170, dont la valeur crête est proportionnelle au taux d'accroissement $\Delta C/\Delta t$ du couple C : à couple constant, ce signal est nul ; si le couple croît lentement la valeur crête reste inférieure à la valeur limite $V_0$ de la référence 180 ; si le couple augmente brusquement, elle dépasse cette valeur $V_0$, ce qui entraînera la coupure de l'alimentation du moteur.

Au moment de la mise sous tension du dispositif, comme indiqué plus haut, il peut se faire que le système se déclenche spontanément : pour éviter ce déclenchement intempestif, on prévoit un circuit 300 d'inhibition à la mise sous tension, commandé par l'alimentation 200, qui, par exemple, bloque la transmission au comparateur du signal issu du différentiateur pendant un laps de temps suffisant pour permettre au moteur de démarrer et d'atteindre un couple de fonctionnement sensiblement uniforme. Cette inhibition peut se faire notamment en mettant à la masse l'entrée correspondante du comparateur, qui se trouvera ainsi à une tension toujours inférieure à la tension de la référence 180.

Pour assurer, comme indiqué également plus haut, une protection même pendant le régime transitoire de démarrage du moteur, on prévoit de plus un circuit de démarrage en douceur du moteur.

En particulier, par une commande de phase adaptée et par l'intermédiaire du triac 110, on peut faire varier progressivement la tension efficace aux bornes du moteur afin de ne pas dépasser le couple maximum que peut supporter l'utilisateur pendant le temps d'inhibition.

On peut ainsi prévoir un générateur de rampe 410 qui, de manière classique, fera varier progressivement l'angle de conduction du triac entre 0 et 180°.

Le circuit 420 de transmission du signal de commande transmet au circuit de commande 120 une tension lentement décroissante à partir d'une valeur moyenne égale à la moitié de la tension d'alimentation jusqu'à une valeur nulle, cette tension étant l'image de la tension croissante produite par le générateur de rampe 410. Une fois cette durée écoulée, il peut être bloqué par le comparateur 190.

La variation de l'angle de conduction du triac est obtenue par un générateur de dents de scie de référence 430 de fréquence double du secteur, synchronisé sur celui-ci par un détecteur 440 de passage à zéro de la tension secteur. Le signal résultant est comparé à la rampe produite par le circuit 410, dans un comparateur 450, pour obtenir des impulsions de commande du triac ayant un déphasage croissant de 0 à 180°.

L'allure du courant ainsi découpé est représentée figure 4 (a) : pendant la phase (I), le courant est découpé avec un déphasage croissant de 0 à 90°; pendant la phase (II), ce déphasage varie de 90 à 180°; enfin, pendant la phase (III), le démarrage en douceur est terminé, le courant n'est plus découpé et l'allure de la tension est sinusoïdale.

Cependant, la durée du démarrage en douceur doit être supérieure à la durée d'inhibition $t_i$ du circuit de détection. Donc, après la fin de l'inhibition, la tension est encore découpée par le triac. Le principe de fonctionnement, précédemment exposé, des moyens de détection devient imparfait, car la proportionnalité du couple de réaction à la valeur de crête de l'intensité n'est vérifiée qu'en régime sinusoïdal et, dans le cas d'une tension découpée, il serait nécessaire d'opérer une pondération d'après le facteur de forme de la tension.

Comme on peut le voir sur la figure 4 (b), la valeur de crête après intégration, croissante dans la phase (I), est sensiblement constante dans la phase (II) lorsque l'angle de conduction du triac varie de 90 à 180°. Comme l'augmentation du couple (résultant de l'augmentation de l'angle de conduction) n'entraîne pas une variation proportionnelle de la valeur de crête du courant, le couple de réaction peut dépasser le seuil tolérable sans que pour autant le dispositif ne le détecte.

Pour pallier cet inconvénient, on adjoint au circuit un limiteur de couple 500 tenant compte de l'intensité moyenne, c'est-à-dire de l'aire du signal. Si le couple (représenté figure 4 (c)) dépasse une valeur limite Co, la limitation de couple entre en fonction. Elle peut notamment agir sur la rampe produite par le générateur 410 en modifiant son amplitude, donc en réduisant l'angle de conduction jusqu'à ce qu'il s'établisse un équilibre autour du couple limite supportable par l'utilisateur.

La limitation de couple apporte l'avantage supplémentaire, dans le cas où l'effort de l'outil augmente constamment mais lentement, donc sans faire déclencher le système de protection, de limiter le couple à une valeur acceptable pour l'utilisateur et pour la machine. Cette limitation de couple peut ne pas être rapide, puisque l'accroissement de couple est progressif, du fait du démarrage en douceur.

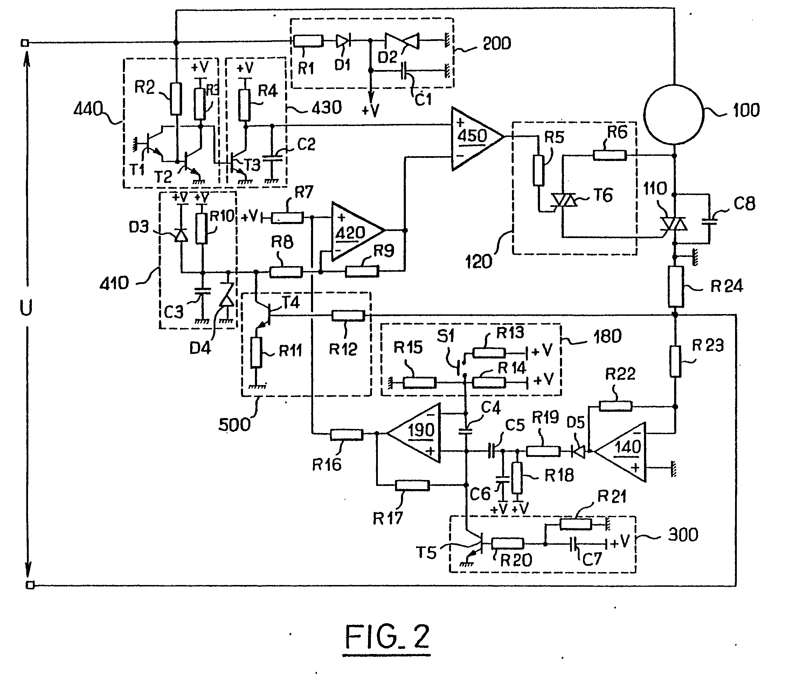

La figure 2 montre un exemple de schéma électronique détaillé correspondant au schéma-bloc de la figure 1.

Sur cette figure, le moteur 100, en série avec le triac 110 et la résistance shunt R24, est branché aux bornes du secteur U.

La résistance R24 mesure le courant qui traverse le moteur, et l'amplificateur opérationnel 140, dont le gain est déterminé par les résistances R22 et R23, amplifie l'alternance négative de ce signal.

La diode D5, en combinaison avec le condensateur C6, détecte la valeur de crête du courant, l'ensemble formé par la résistance R19 et le même condensateur C6 constituant le circuit intégrateur.

La résistance R18 définit la constante de décharge de la mémoire de cet intégrateur. En effet, en l'absence de cette résistance, l'intégrateur ne pourrait pas suivre les variations décroissantes du couple. Il est donc nécessaire de décharger le condensateur C6 lorsque la valeur de crête du courant décroît.

La différentiation est assurée par le réseau constitué de la résistance R17 et du condensateur C5 placé aux bornes de l'amplificateur opérationnel 190 (le condensateur C4 placé entre les deux entrées de cet amplificateur assurant une limitation de la bande passante).

L'amplificateur opérationnel 190 agit également en comparateur à mémoire : son entrée inverseuse est reliée au circuit 180 fournissant une référence de tension, lui-même constitué d'un pont diviseur formé des résistances R14 et R15 (la valeur de la tension de référence peut être modifiée par la résistance R13 mise en parallèle avec R14 par l'intermédiaire du commutateur S1 manœuvré au moment du passage d'une autre vitesse mécanique).

Lorsque l'une au moins des impulsions (dont l'allure est représentée fig. 3c) transmises sur l'entrée directe de l'amplificateur 190 dépasse la tension de référence fournie par le diviseur R14/R15, le comparateur bascule (fonction comparaison) et se verrouille (fonction mémoire) grâce à R17. La sortie est saturée à la valeur de la tension d'alimentation + V, et cette information est transmise par la résistance R16 aux circuits assurant la coupure de l'alimentation du moteur.

Avec le circuit 200, l'alimentation des différents composants se fait par la résistance chutrice R1. Le courant est redressé par la diode D1, et la tension est stabilisée à la valeur + V requise par la diode Zener D2 et filtrée par le condensateur C1.

Le circuit 300 d'inhibition à la mise sous tension se compose du réseau des résistances R20, R21 et du condensateur C7 : tant que ce dernier n'est pas chargé, le transistor T5 est conducteur, mettant à un potentiel voisin de la masse l'entrée directe du comparateur 190 et l'empêchant de basculer. Une fois la charge du condensateur C7 terminée, le transistor T5 ne conduit plus, débloquant ainsi le comparateur 190.

Le démarrage en douceur est obtenu à partir du générateur de rampe 410 : la charge lente du condensateur C3 est assurée par la résistance R10 jusqu'à une tension fixée par la diode Zener D4 (la diode D3 servant, lors de la coupure de l'alimentation, à assurer une décharge plus rapide du condensateur C3). La tension de rampe est transmise à l'entrée inverseuse du comparateur 450 par l'intermédiaire de l'amplificateur opérationnel 420, fonctionnant en sommateur grâce aux résistances R7, R8, R9 et R16.

Par ailleurs, le détecteur de passage à zéro 440 est constitué de l'ensemble des transistors T1 et T2 et des résistances R2 et R3 ; il délivre, à chaque passage à zéro de la tension secteur, des impulsions au circuit 430 générateur de dents de scie de référence. Ces impulsions, par l'intermédiaire du transistor T3, ont pour effet de décharger le condensateur C2 très rapidement, ce dernier se rechargeant, par la résistance R4, entre deux passages à zéro. Le signal résultant, appliqué sur l'entrée directe du comparateur 450, est donc un signal en dents de scie de fréquence double de celle du secteur.

Ce dernier signal, comparé, pendant la phase de démarrage en douceur, à la rampe produite par le générateur 410, permet la commande du triac 110 avec un angle de conduction variable. Après le démarrage en douceur, l'angle de conduction est toujours de 180°, la tension d'alimentation du moteur n'étant de ce fait plus découpée.

La commande du triac 110 s'effectue plus précisément par l'intermédiaire du circuit 120 comportant un triac auxiliaire T6 dont la gâchette est reliée par la résistance R5 à la sortie du comparateur 450. Ce triac auxiliaire, par la résistance R6, agit sur la gâchette du triac principal 110 assurant ainsi la commande de l'alimentation du moteur. Le condensateur C8 a pour objet de protéger le triac contre les brusques variations de tension au moment de la commutation.

Enfin, le limiteur de couple 500 comporte un transistor T4, une résistance R11 et une résistance R12 reliée à la résistance R24 de mesure du courant. Lorsque la tension aux bornes de cette dernière résistance dépasse la tension base-émetteur du transistor, celui-ci commence à conduire, provoquant une décharge du condensateur C3 et donc un infléchissement de la rampe produite par le circuit 410. Il en résulte une réduction, ou tout au moins une stabilisation, de l'angle de conduction du triac 110 et donc une limitation du courant traversant le moteur.

L'action de ce circuit limiteur de couple 500 n'est pas limitée à la phase de démarrage en douceur. En effet, si le couple vient à augmenter très lentement mais sans à-coup, lorsque le régime permanent est établi le comparateur 190 ne détectera aucune variation brusque du courant et donc ne coupera pas l'alimentation du moteur. Par contre, le transistor T4 deviendra conducteur et abaissera le potentiel de l'entrée inverseuse de l'amplificateur 420. De ce fait, l'angle de conduction deviendra inférieur à 180° entraînant à nouveau un découpage de la tension d'alimentation.

Cet asservissement permettra de limiter le couple à la valeur maximale admissible, sans pour autant entraîner le déclenchement du dispositif et la coupure de l'alimentation du moteur.

**Revendications**

1. Dispositif d'alimentation électrique en courant alternatif du moteur (100) d'une machine électroportative, le moteur étant disposé en série avec un semiconducteur (110) commandé en phase (120), du type comprenant des moyens de mesure (130-170) de la variation de la valeur de crête de l'intensité traversant le moteur et des moyens de détection (190), coopérant avec les moyens de mesure, aptes à intervenir sur l'alimentation électrique du moteur pour l'interrompre lorsque le taux d'accroissement de cette valeur de crête de l'intensité atteint un seuil prédéterminé correspondant au couple de réaction maximal supportable par l'utilisateur de la machine, dans lequel lesdits moyens de mesure délivrent aux moyens de détection (190), pour comparaison à une valeur de référence (180) prédéterminée, un signal sensiblement proportionnel au taux d'accroissement de la valeur de crête de l'intensité traversant le moteur, caractérisé en ce que lesdits moyens de mesure comprennent, en série, des moyens redresseurs (150 ; D5) pour redresser un signal proportionnel à l'intensité traversant le moteur, des moyens intégrateurs (160 ; R19, C6) délivrant un signal sensiblement proportionnel à la valeur de crête de l'intensité traversant le moteur, et des moyens différentiateurs (170 ; R17, C5) du signal délivré par les moyens intégrateurs, et en ce qu'il comprend en outre :
- des moyens inhibiteurs (300) aptes à empêcher l'interruption de l'alimentation par les moyens de détection pendant une durée prédéterminée suivant la mise sous tension du moteur,

- des moyens de démarrage en douceur (410-450) pour faire varier progressivement la tension moyenne aux bornes du moteur de manière à ne pas dépasser, au moins pendant la durée de fonctionnement des moyens inhibiteurs, le couple de réaction maximal supportable par l'utilisateur, cette variation progressive de tension étant réalisée par le semi-conducteur (110) commandé en phase (120) disposé en série avec le moteur, et

- des moyens (500) limiteurs de la tension moyenne aux bornes du moteur, coopérant avec les moyens de démarrage en douceur de manière à toujours limiter le couple développé par le moteur à une valeur limite prédéterminée (Co) et à autoriser, au cas où ladite valeur limite prédéterminée est atteinte, l'établissement d'un équilibre du couple développé autour de cette valeur limite.

2. Dispositif selon la revendication 1, où le moteur coopère avec un réducteur à plusieurs vitesses mécaniques, caractérisé en ce qu'il est prévu autant de valeurs de référence que de vitesses, valeurs dont la commutation est effectuée au moment du choix de la vitesse correspondante, de manière que le couple de réaction maximal reste sensiblement le même quelle que soit la vitesse choisie.

**Claims**

1. A device for supplying electrical A.C. power to the motor (100) of a portable electric machine, said motor being provided in series with a phase-controlled semi-conductor (110), comprising :

- a measuring means (130, 170), for measuring the variation of the peak value of the current passing through the motor

- detecting means (190), cooperating with said measuring means, for acting on the power supply of the motor to switch off said power supply when the rate of increase of said peak value reaches a predetermined threshold corresponding to the maximum kickback torque that may bear the user of the machine, said measuring means delivering to said detecting means (190), for comparison to a predetermined reference value (180), a signal substantially proportionnal to the rate of increase of said peak value of the current passing through the motor, characterized by the fact that said measuring means comprises, connected in series :

- rectifier means (150 ; D5), for rectifying a signal proportionnal to the current passing through the motor,

- integrator means (160 ; R19, C6), for delivering a signal substantially proportionnal to said peak value of the current passing through the motor,

- differentiator means (170 ; R17, C5), for differentiating the signal delivered by said integrator means,

said device further comprising :

- inhibitor means (300) for preventing interruption of the power supply by said detecting means during a predetermined period following the turning-on of the motor,

- softstart means (410-450) for progressively varying the mean value of the voltage across the terminals of the motor, so as not to exceed, at least during the period of operation of said inhibitor means, the maximum kickback torque that may bear the user, said progressive variation in voltage being obtained by the phase-controlled semiconductor (110), connected in series with the motor, and

- means (500) for limiting the mean value of the voltage across the terminals of the motor, cooperating with said softstart means, so as to limit, in any event, the torque produced by said motor to a predetermined maximum value (Co), and to allow, in case said predetermined maximum value is reached, the obtention of a stability of the torque produced around said maximum value.

2. A device according to claim 1, wherein the motor cooperates with a mechanical multispeed reducer, characterized in that there are provided as many reference values as speeds, the switching of which values is made when choosing the corresponding speed, so as that the maximum kickback torque remains substantially the same whatever the speed chosen.

**Patentansprüche**

1. Vorrichtung zur Versorgung eines Motors (100) einer tragbaren elektrischen Maschine mit Wechselstrom, bei der der Motor in Serie mit einem gleichphasig (120) gesteuerten Halbleiter (110) liegt, mit Mitteln (130 bis 170) zum Messen der Veränderung des Spitzenwerts des Stroms durch den Motor und Erfassungsmitteln (190), die mit den Mitteln zum Messen zusammenarbeiten und dazu geeignet sind, in die elektrische Versorgung des Motors einzugreifen, um zu unterbrechen, wenn der Anstiegsgrad des Spitzenwertes des Stroms eine vorbestimmte Grenze erreicht, die dem Reaktionsdrehmoment entspricht, das maximal von dem Benutzer der Maschine gehalten werden kann, wobei die Mittel zum Messen ein dem Anstiegsgrad des Spitzenwertes des Stroms durch den Motor proportionales Signal an die Erfassungsmittel (190) zum Vergleich mit einem vorbestimmten Sollwert (180) liefern, dadurch gekennzeichnet, daß die Mittel zum Messen in Serie Gleichrichtmittel (150 ; D5) zum Gleichrichten eines der Stromstärke durch den Motor proportionalen Signals, Integriermittel (160 ; R19, C6), welche ein dem Spitzenwert des Stroms durch den Motor proportionales Signal liefern, und Differenziermittel (170 ; R17, C5) für das von den Integriermitteln gelieferte Signal umfassen, und dadurch, daß die Vorrichtung ferner umfaßt : Sperrmittel (300) zum Verhindern der Unterbrechung der Energieversorgung durch die Erfassungsmittel während einer vorbestimmten, dem Unter-Spannung-Setzen des Motors folgenden Zeitspanne, Mittel (410 bis 450) zum langsamen Erhöhen der Durschschnittsspannung an den Motorklemmen derart, daß mindestens während des Betriebs der Sperrmittel das maximal von dem Benutzer haltbare Reaktionsmoment nicht überschritten wird, wobei die Spannungserhöhung mittels des gleichphasig (120) gesteuerten Halbleiters (110) in Serie mit dem Motor erfolgt, und Begrenzungsmittel (500) für die Durchschnittsspannung an den Motorklemmen, die mit den Mitteln zum langsamen Erhöhen derart zusammenarbeiten, daß sie das von dem Motor entwickelte Moment immer auf einen vorbestimmten Grenzwert (Co) begrenzen und für den Fall, daß der vorbestimmte Grenzwert erreicht ist, bewirken, daß das entwickelte Moment auf dem Grenzwert gehalten wird.

2. Vorrichtung nach Anspruch 1, wobei der Motor mit einem Untersetzungsgetriebe für mehrere Geschwindigkeiten arbeitet, dadurch gekennzeichnet, daß ebenso viele Sollwerte wie Geschwindigkeiten vorgesehen sind, wobei der Wechsel im Augenblick des Wählens der entsprechenden Geschwindigkeit derart erfolgt, daß das maximale Reaktionsmoment im wesentlichen dasselbe wie dasjenige der gewählten Geschwindigkeit ist.

## FIG_1

FIG. 2

0 119 142

FIG_4

FIG_3